# EUROPEAN PATENT SPECIFICATION

(11) **EP 0 624 181 B1**
(45) Date of publication and mention of the grant of the patent: **22.11.1995**
(21) Application number: 93914533.0
(22) Date of filing: 28.01.1993
(51) Int. Cl.: C09D 5/00

(54) **A SINGLE- OR MULTICOLOURED WATER PAINT**
EIN- ODER MEHRFÄRBIGES WÄSSRIGES ANSTRICHMITTEL
PEINTURE A L'EAU A TEINTE UNIQUE OU MULTIPLE

(30) Priority: 30.01.1992 IT MO920013
(43) Date of publication of application: 17.11.1994
(73) Proprietor: SPETRA S.R.L., 41034 Finale Emilia (MO) (IT)
(72) Inventor: ROSSETTI, Edoardo, I-41034 Finale Emilia (IT)
(74) Representative: Rambelli, Paolo
(86) International application number: EP9300192
(87) International publication number: WO9315153

(56) References cited:
- GB-A- 1 150 283
- US-A- 3 376 282
- US-A- 3 943 080

## Description

The invention relates to a single- or multicoloured water paint, particularly for simulation, that is, a paint which does not have organic solvents and thus is ecologically acceptable, and which is particularly suitable for simulating the special aesthetic effects of plastering or coverings which can be produced with the use of materials of a decorative nature, that is, a paint which, when applied, can simulate coverings of plasterwork, wood, paper, marble, ornamental stones, leather, plastics materials and other materials.

Water paints comprising a dispersion or emulsion of an insolubilised macromolecular colloid in water are known from US-3,458,328, US-4,476,654 and EP-A-0 182 962 whose description is incorporated herein by reference.

The prior art comprises no paints with which anyone who is not a skilled painter can produce, in a simple and repeatable manner, aesthetic effects simulating coverings which up to now could generally be produced in a satisfactory manner only by the application of plaster or by the use of wood, paper, marble, ornamental stones, leather, plastics material or other material which, by its nature, is suitable to produce decorative surface effects due to patterns, colours or bas-relief; moreover, these effects could not be produced with the use of a single paint nor, on the other hand, could different effects be produced with the use of the same paint.

At the moment, in order to attempt to produce similar aesthetic effects, it is necessary to use two or more single-coloured paints of different colours and to make use of professionals in the field who, what is more, should have wide experience and artistic sensitivity; this involves considerable cost with a risk of obtaining results which do not conform to the effects originally envisaged and which, sometimes, cannot even be repeated to an appreciable extent from one wall to another.

As a result of the foregoing, there is a need to solve the technical problem of finding a paint which, during application and in dependence on the methods and tools used, can form coverings which simulate surfaces formed with plasterwork, wood, paper, marble, ornamental stones, leather, plastics materials and other materials without the need for any particular skill to achieve the desired aesthetic result; these effects should also be obtainable even with the use of a single paint.

The invention solves the aforesaid technical problem by providing a paint comprising a dispersion of a macromolecular colloid in the form of agglomerations with dimensions tipycally of from 0.5 to 10 mm, which are obtainable by insolubilising a first macromolecular colloid or mixture thereof in a water dispersion of elemental particles obtained by insolubilising a second macromolecular colloid or mixture thereof in water in the presence of solid particles and a film forming emulsion polymer, said agglomerations being susceptible to break up into said elemental particles when subjected to shear stress conditions of usual paint application means.

According to a preferred embodiment, said elemental particles are capable of retaining their individuality when the agglomerations are subjected to shear stress by application means such as a brush, a roller or spray guns, but are susceptible to break further into fragments when the agglomerations are subjected to the higher shear stress which may be generated by application means such as a spatula, a sponge or a plastering trowel.

The advantages achieved by the invention are that different aesthetic effects can be produced easily, even with a single paint, by varying the method of application of the paint and the tool used and can be repeated where necessary so that even a non-professional painter can produce aesthetic effects which simulate coverings of plasterwork, wood, marble, paper, ornamental stones, leather, plastics material and other materials.

The macromolecular colloid used in the practice of the invention is preferably a hydrophilic anionic polyelectrolyte or a non-ionic colloid.

Anionic polyelectrolytes include sulphonated, sulphated and carboxylated synthetic and/or natural linear polymers. Particularly preferred are carboxylated polysaccharides such as starch and cellulose, particularly carboxylated cellulosic materials, including carboxyalkyl cellulose, such as carboxymethylcellulose, and carboxyalkylhydroxyalkyl cellulose, such as carboxyalkylhydroxypropyl cellulose, and acrylic polymers.

Carboxylated starch and cellulose are preferred since they contain hydroxy groups which contribute to avoid full dehydration of the insolubilised colloid.

Non-ionic colloids include alkyl and hydroxyalkyl ethers of polysaccharides such as methyl cellulose, methylhydroxypropyl cellulose, hydroxyethyl cellulose. Preferred are polysaccharides having "vicinal" hydroxyl groups, that is hydroxyl groups in adjacent positions in the polysaccharide ring such as polygalactoglycanes (guar gum or locust bean gum) and ethoxylated or propoxylated polygalactoglycanes.

Film forming emulsion polymers which are useful in the practice of the invention include modified vinyl polymers and acrylic polymers such as styrene-acrylic resins, vinyl-acrylic resins, pure acrylic resins, chloro-vinyl polymers and vinyl-versatic resins.

Solid particles referred to herein, comprise organic and inorganic fillers and/or pigments having a particle size typically of from 0.2 to 40 micron, preferably from 10 to 20 micron, which may have different shapes. The solid particles provide a solid surface on which the colloid may be adsorbed and they should be selected in order to be non-reactive or chemically inert in the dispersion wherein they are introduced.

Preferred solid particles include silicates (kaolin, mica), barium sulphate, aluminum oxide, titanium dioxide, silica, Ca carbonate, inorganic pigments such as Fe oxide, Cr oxide and solid organic pigments such as phthalocyanines, carbon black and naphthol derivatives (e.g. naphthol red) and arylamides.

The process for preparing the water paints, according to the invention, comprises the steps of:
a) contacting in water a first macromolecular colloid or mixture thereof with an insolubilising agent for said colloid, in the presence of said solid particles and of a film forming emulsion polymer thereby to cause gelification or at least partial insolubilisation of said colloid on said solid particles and obtain a dispersion of elemental particles in water, and
b) insolubilising a second macromolecular colloid or mixture thereof with an insolubilising agent therefor in the presence of said water dispersion of elemental particles.

The step of insolubilising a colloid in order to provide a dispersion in water is known in the art and suitable insolubilising agent for different colloids are described in literature. US-3,458,328 (cf. col.8, table I) provides an extensive listing of insolubilising agents for different colloids.

The procedure described in EP-A-0 182 962 to provide a water dispersion of non-soluble precipitated colour particles may as well be used.

In the process of the invention it is however preferred to carry out step a) by first dispersing said solid particles consisting of fillers and/or pigments in water containing a non-ionic wetting agent, which is preferably selected from products of condensation of ethylene or propylene oxides and alkylphenols, such as C₈-C₁₂ alkylphenol, derivatives of ethoxylated or propoxylated fatty acids (e.g. polyethyleneglycol monolaurate) and ethoxylated acetylene derivatives.

The typical concentration of non-ionic wetting agent is from 0.1 to 0.5% by wt.

The concentration of solid particles in water is typically from 0.5 to 40% by wt.

In order to achieve as much as possible irreversible adsorbtion of the colloid on the solid surface, the colloid is introduced in the suspension of solid particles in the absence of ionic surfactants which are competitive with the colloid in the adsorbtion on the solid surface.

The film forming emulsion polymer is typically present in a concentration of from 10 to 35% wt..

The concentration of the colloid, which is added, is from 0.5 to 7% by wt.

The colloid is insolubilised by means of addition of an insolubilised agent, as previously specified.

If the macromolecular colloid is an anionic colloid with carboxylic groups, the preferred gelling and/or insolubilising agents are one or more salts containing a polyvalent cation, particularly organic or inorganic salts of Al, Fe, Cu, Ca, Ag and heavy metals.

If the macromolecular colloid used is a non-ionic colloid with so-called "vicinal" hydroxyl groups, the preferred gelling and/or insolubilising agents used are boric acid and organic titanates or zirconates such as alkanolamine or acetylacetonate titanate or zirconate, e.g. triethanolamine titanate.

The insolubilising step may be carried out in the presence of a thickener. The preferred thickeners are non-ionic thickeners preferably modified by lipophilic groups, such as cellulose ethers modified with introduction of lipophilic groups.

It is preferred to operate under conditions which cause only partial insolubilisation of the colloid, whereby, when carboxylated polysaccharides or acrylic polymers are used, the amount of insolubilising agent which is added is such as to not neutralize all the functional groups which make water soluble the original colloid.

In step b), the dispersion of elemental particles prepared according to step a), is used and a second colloid or mixture of colloids is insolubilised in said water dispersion of elemental particles.

Preferably, the colloid used in step b) has the same chemical nature (that is anionic or non-ionic) or is the same colloid as that used in step a). Preferably, a colloid is used having a molecular weigth above 400,000, more preferably above 500,000.

The colloid is insolubilised by further addition of an insolubilising agent or if an excess thereof has been used in the first step without further addition.

It has been found that the concentration in water of the solid particles, which act as reaction inhibitors and provide a solid surface on which the colloid is preferably irreversibly adsorbed and the nature of the colloid, play an important role in determining the dimensions and break up properties of the agglomerations into said elemental particles.

In order to obtain elemental particles having a dimension of from 0.1 to 0.5 mm, it is preferred to use a concentration of solid particles in water of from 10 to 40% by wt. preferably together with a relatively low molecular weigth colloid.

In order to obtain elemental particles having a dimension of from 0.5 to 2 mm and higher, solid particle concentration in water of from 0.5 to 5% by wt., is used preferably from 1 to 2% by wt. preferably together with a high molecular weigth colloid.

In the present description, high molecular weigth or high viscosity colloid is meant to indicate a colloid having preferably a molecular weigth above 500,000 and low molecular weigth or low viscosity colloid is meant to indicate a colloid having preferably a molecular weight below 100,000.

In the second step b), it is preferred to use a high molecular weigth colloid in order to obtain coarse agglomerations; the colloid concentration is typically from 0.5 to 5% wt.. In step b), a pigment may be added to the colloid to be insolubilised, typically in a small amount of from 0.05 to 0.1% by wt. in order to colour the external phase of the agglomerations; addition of solid surface fillers should however be preferably avoided.

A film forming emulsion polymer, as previously defined, may be added in step b), preferably in the amount of from 2 to 20% wt referred to the overall composition.

If the reagents are mixed slowly during the formation of the gel and insolubilisation of the macromolecular colloid, agglomerations with dimensions of 0.5-10 mm, coloured by the pigments, are formed producing a single-coloured paint.

If two or more single-coloured paints are mixed together, a multicoloured paint is produced.

The dimensions of the particles into which the agglomerations of the gel break up upon application are controlled by the solid particles of the pigments and fillers.

The dispersant phase of the paint may be coloured with transparent pigments or with water-soluble dyes of a colour different from that of the pigments in the gel particles in order to produce a paint which, once applied, forms a covering constituted by a background colour on which the colour effects due to the pigments in the gel particles can be clearly distinguished.

According to the invention, it may be desirable to obtain agglomerations of elemental particles, having different mechanical properties. A first type of agglomerations may comprise a matrix which has a mechanical strength against breaking up into said elemental particles which is not higher than the stress exertable by paint application means such as paint brushes and rollers. Such agglomerations are obtainable by using in step b) anionic macromolecular colloids, particularly carboxylated starch and cellulose, which are made insoluble by means of metal cations as insolubilising agents, in order to obtain the matrix structure.

It may be desirable to obtain a second type of agglomerations which have a matrix of higher mechanical strength, such that they are susceptible of being broken up into particles only under the stress exertable by paint application means such as the spatula, the sponge or the plastering trowel. This latter type is obtainable by using in step b), in order to obtain the matrix structure, non-ionic polymers such as particularly polygalactoglycanes (polygalactomannan) which are made insoluble by means of boric acid and/or organic zirconates or titanates.

The paints may comprise usual additives for paints, such as preservatives, biocides.

Examples of paints produced according to the invention are described below, the quantities of the components being expressed as percentages by weight and the components being indicated in a preferred order of addition. Examples 1-10 relate to the preparation of paints consisting of water dispersions of said elemental particles.

### EXAMPLE 1

| | | |
|---|---|---|
| water | to make up to | 100 |
| non-ionic wetting agent* | from 0.01 to | 0.5 |
| preservative | from 0.2 to | 0.3 |
| barium sulphate | from 2 to | 15 |
| inorganic pigments | from 10 to | 15 |
| low-viscosity sodium carboxymethyl cellulose | from 1 to | 5 |
| 2.5% non-ionic thickener with lipophilic groups in water | from 5 to | 10 |
| 2% high-viscosity sodium carboxymethyl cellulose in water | from 0.75 to | 2.5 |
| 10% aqueous solution of aluminium acetate | from 1.5 to | 5 |
| vinyl versatate resins in emulsion | from 10 to | 25 |
| % high-viscosity sodium carboxymethyl cellulose in water | from 7 to | 14 |
| 2.5% non-ionic thickener with lipophilic groups in water | from 5 to | 15 |

| | | |
|---|---|---|
| * e.g. nonyl phenol condensated with 12 moles of oxyethylene. | | |

The product is prepared by first dispersing in water the non-ionic wetting agent, the solid particles (barium sulphate and pigments) and low-viscosity Na CMC.

In a second vessel a solution of the non-ionic thickener and high-viscosity Na CMC is prepared in the amount required to provide the given concentration. In a third vessel a reactive medium is prepared comprising the insolubilising agent (Al acetate) and film-forming polymer (polyvinyl-versatate). The content of said third vessel is then poured into said second vessel under stirring and the resulting composition is poured into the water dispersion under stirring. High-viscosity Na CMC may further be added to avoid dehydration of the insolubilised colloid and a non-ionic thickener, selected from those previously cited, may finally be added to control the reology properties.

### EXAMPLE 2

The composition corresponds to that of example 1 wherein barium sulphate is substituted with mica (particle size from 5 to 20 micron) in the amount of from 2 to 13 % wt. referred to the overall composition. The product may be prepared by means of the same preferred procedure of Example 1.

### EXAMPLE 3

The composition corresponds to that of example 1 wherein barium sulphate is substituted with kaolin (particle size from 5 to 20 micron) in the amount of from 2 to 13 % wt. referred to the overall composition. The product may be prepared by means of the same preferred procedure of Example 1.

### EXAMPLE 4

The composition corresponds to that of example 1 wherein barium sulphate is used in the amount of from 9 to 20% wt and organic pigments are used in the amount of from 1 to 3 %wt. The product may be prepared by means of the same preferred procedure of Example 1.

### EXAMPLE 5

By following the procedure of Example 1, the following composition may be prepared:

| | | |
|---|---|---|
| water | to make up to | 100 |
| non-ionic wetting agent | from 0.01 to | 0.5 |
| preservative | | 0.160 |
| barium sulphate | from 3.5 to | 12.4 |
| inorganic pigments | from 6.5 to | 16 |
| organic pigments in aqueous dispersion | from 0.5 to | 1 |
| low-viscosity sodium carboxymethyl cellulose | from 1 to | 5 |
| 2.5% non-ionic thickener with lipophilic groups in water | from 5 to | 10 |
| 2% low-viscosity sodium carboxymethyl cellulose in water | from 0.75 to | 2.5 |
| 10% aqueous solution of aluminium acetate | from 1.5 to | 2.5 |
| vinyl versatate resins in emulsion | from 10 to | 30 |
| 2% low-viscosity sodium carboxymethyl cellulose in water | from 7 to | 14 |
| 2.5% non-ionic thickener with lipophilic groups in water | from 5 to | 15 |

### EXAMPLE 6

By following the procedure of Example 1, the following composition may be prepared:

| | | |
|---|---|---|
| water | to make up to | 100 |
| non-ionic wetting agent | from 0.01 to | 0.30 |
| barium sulphate | from 3.5 to | 12.4 |
| inorganic pigments | from 6.5 to | 16 |
| organic pigments in aqueous dispersion | from 0.5 to | 5 |
| low-viscosity sodium carboxymethyl cellulose | from 1 to | 5 |
| 2.5% non-ionic thickener with lipophilic groups in water | from 5 to | 10 |
| 2% high-viscosity sodium carboxymethyl cellulose in water | from 0.75 to | 2.5 |
| 10% aqueous solution of aluminium acetate | from 1.5 to | 5 |
| vinyl versatate resins in emulsion | from 20 to | 25 |
| carboxylated natural resins (50%wt alkali solution) | from 1 to | 2 |
| 2% high-viscosity sodium carboxymethyl cellulose in water | from 7 to | 14 |
| 2.5% non-ionic thickener with lipophilic groups in water | from 5 to | 15 |

In the above composition, carboxylated natural resins such as rosin resin or shellac are anionic colloids which are added together with the vinyl versatate resins.

### EXAMPLE 7

The following composition may be prepared according to the procedure of Example 1:

| | | |
|---|---|---|
| water | to make up to | 100 |
| preservative | from 0.2 to | 3 |
| barium sulphate | from 2 to | 12.4 |
| inorganic pigments | from 6.5 to | 16 |
| organic pigments in aqueous dispersion | from 0.5 to | 1 |
| low-viscosity sodium carboxymethyl cellulose | from 1 to | 5 |
| 2.5% non-ionic thickener with lipophilic groups in water | from 5 to | 10 |
| 2% high-viscosity sodium carboxymethyl cellulose in water | from 0.75 to | 2.5 |
| branched polyacrylate | from 0.01 to | 1.3 |
| 10% aqueous solution of aluminium acetate | from 1.1 to | 5 |
| vinyl versatate resins in emulsion | | 22 |
| carboxylated natural resins | from 1 to | 2 |
| 2% high-viscosity sodium carboxymethyl cellulose in water | from 7 to | 14 |
| 2.5% non-ionic thickener with lipophilic groups in water | from 5 to | 15 |

### EXAMPLE 8

The following composition may be prepared according to the procedure of Example 1, wherein acrylic resin emulsion is used as film forming polymer:

| | | |
|---|---|---|
| water | to make up to | 100 |
| non-ionic wetting agent | from 0.01 to | 0.5 |
| preservative | from 0.2 to | 3 |
| barium sulphate | from 3.5 to | 12.4 |
| inorganic pigments | from 6.5 to | 16 |
| organic pigments in aqueous dispersion | from 0.5 to | 1 |
| low-viscosity sodium carboxymethyl cellulose | from 1 to | 5 |
| 2.5% non-ionic thickener with lipophilic groups in water | from 5 to | 10 |
| 4% high-viscosity sodium carboxymethyl cellulose in water | from 0.35 to | 1.3 |
| 10% aqueous solution of aluminium acetate | from 1.5 to | 5 |
| carboxylated natural resins (50% wt. alkali solution) | from 1 to | 2 |
| acrylic resins in emulsion | from 22 to | 35 |
| 4% low-viscosity sodium carboxymethyl cellulose in water | from 3.5 to | 14 |
| 2.5% non-ionic thickener with lipophilic groups in water | from 5 to | 15 |

### EXAMPLE 9

| | | |
|---|---|---|
| water | to make up to | 100 |
| non-ionic wetting agent | from 0.01 to | 0.5 |
| preservative | from 0.2 to | 3 |
| barium sulphate | from 2 to | 12.4 |
| inorganic pigments | from 6.5 to | 16 |
| organic pigments in aqueous dispersion | from 0.5 to | 1 |
| low-viscosity sodium carboxymethyl cellulose | from 1 to | 5 |
| 2.5% non-ionic thickener with lipophilic groups in water | from 5 to | 10 |
| 2% high-viscosity sodium carboxymethyl cellulose in water | from 0.75 to | 5 |
| 10% aqueous solution of aluminium acetate | from 1.5 to | 5 |
| vinyl versatate resins in emulsion | from 22 to | 35 |
| carboxylated acrylic styrene resins | from 1 to | 2 |
| 2% high-viscosity sodium carboxymethyl cellulose in water | from 7 to | 14 |
| 2.5% non-ionic thickener with lipophilic groups in water | from 5 to | 10 |

The products of Examples 1 to 9 are single-coloured paints which comprise a water dispersion of said elemental particles having a dimension of from 0.1 to 0.5 mm, which can be applied singly or mixed with each other at least by spraying, with a roller, with a brush or with a spatula.

According to the invention, such products are used for preparing paints comprising agglomerations susceptible of breaking up when applied. In view of the relatively high amount of fillers and/or solid pigments, the agglomerations obtained therefrom break up, when applied, into relatively small elemental particles having a dimension in the above-quoted range.

In these paints, the sodium carboxymethyl cellulose constitutes the anionic macromolecular colloid, the aluminium acetate is the insolubilising agent, the barium sulphate, the mica and the kaolin are the solid fillers, the carboxylated natural resins and the carboxylated acrylic styrene resins reduce the stiffness of the gel; the vinyl versatate resins are preferred since they keep the pH of the colloidal dispersion within the acid range in order to prevent the formation of sodium aluminate.

Further examples of formulations of the paint according to the invention are given below.

### EXAMPLE 10

A dispersion of coarse elemental particles is produced according to the following:

| | |
|---|---|
| 1% high-viscosity sodium carboxymethyl cellulose in water | 69.5 |
| 50% solid pigment in aqueous dispersion | 2 |
| 50% solid vinyl versatate emulsion | 7 |
| 25% aqueous solution of calcium acetate | 2.5 |
| 10% solution of aluminium acetate | 1.25 |
| 2% high-viscosity sodium carboxymethyl cellulose in water | 17.5 |

The product thus produced is in the form of a dense gelatinous mass.

If the product is mixed with another of the same composition, or two or more such products of different colours, are mixed slowly, a dispersion of elemental particles is obtained having a dimension typically of from 0.5 to 2 mm.

In this example, the sodium carboxymethyl cellulose represents the anionic macromolecular colloid, and the calcium acetate and the aluminium acetate are the insolubilising agents.

### EXAMPLE 11

Paints consisting of agglomerations in water, according to the invention, are obtained according to the following composition, wherein the components are listed in the preferred order of addition:

| | |
|---|---|
| water to make up to | 100 |
| high-viscosity sodium carboxymethyl cellulose | 1-2 |
| product of examples 1 to 9 | 10-40 |
| 50% solid vinyl versatate emulsion | 5-10 |
| branched sodium polyacrylate up to | 0.8 |
| 25% aqueous solution of calcium acetate | 2.5-5 |
| 10% aqueous solution of aluminium acetate | 1-2 |
| 2% high-viscosity sodium carboxymethyl cellulose | 10-25 |

The paint thus produced is in the form of a dense gelatinous mass.

If the paint is mixed with another of the same composition, or two or more such paints of different colours, are mixed slowly agglomerations of gels are produced and, upon application, these break or split up as a result of the forces exerted by the tool used, giving rise to single-coloured spots of colour in graduated shades, or to multicoloured spots of colour, also in graduated shades, if a mixture of two or more paints of different colours is used.

The paints produced according to the present example may also be mixed with a paint produced according to one of Examples 1 to 9 to obtain, upon application, a surface with spots of colour on a background which in turn is coloured.

In this example, the sodium carboxymethyl cellulose and the sodium polyacrylate represent the anionic macromolecular colloids and the calcium acetate and the aluminium acetate are insolubilising agents.

### EXAMPLE 12

| | | |
|---|---|---|
| water | make up to | 100 |
| high-viscosity sodium carboxymethyl cellulose | from 1 to | 2 |
| product of example 10 | from 5 to | 20 |
| 50% solid vinyl versatate emulsion | from 5 to | 10 |
| 25% aqueous solution of calcium acetate | from 2 to | 4 |
| 10% aqueous solution of aluminium acetate | from 1 to | 2.5 |
| 2% high-viscosity sodium carboxymethyl cellulose | from 10 to | 25 |

The paint thus produced is in the form of a dense, transparent, gelatinous mass containing the coloured particles of paint.

If the paint is mixed with another of the same composition, or two or more paints of different colours, are mixed slowly, agglomerations with dimensions up to 10 mm are produced.

The paints produced according to the present example may also be mixed with a paint produced according to one of Examples 1 to 9 formed with transparent pigments or without pigments, to produce, upon application, a surface constituted by a dispersion of coloured particles on a transparent or slightly coloured background.

### EXAMPLE 13

A product according to the invention is obtained according to the following procedure:

### COMPOSITION A

| | |
|---|---|
| water | 53.7 |
| calcium carbonate (powder) | 2-30 |
| galactomannan | 0.8-1.5 |
| 50% acrylic styrene resin emulsion | 18 |
| coalescent (a mixture of carbonyl ethers) | 0.3 |
| preservative | 0.2 |

An organic and/or inorganic pigment dispersion and insolubilising agents are added to composition A, which contains a non-ionic macromolecular colloid with so-called vicinal hydroxyl groups, that is, galactomannan, to produce composition B constituted by a resilient, gelatinous mass.

### COMPOSITION B

| | |
|---|---|
| composition A | 94.5 |
| organic and/or inorganic pigment dispersion | 2.8 |
| triethanolamine titanate | 1.9-4 |
| 1.5% solution of boric acid | 0.8-1.5 |

The triethanolamine titanate and the boric acid are the insolubilising agents.

The calcium carbonate in the composition A has the effect of making the gel more resistant to forces which tend to break it up.

A gelatinous mass is obtained which is then dispersed in a vehicle having the following composition to provide dispersion of elemental particles in water.

### VEHICLE

| | |
|---|---|
| 1% high-viscosity sodium carboxymethyl cellulose in water | 46.5 |
| 50% acrylic styrene emulsion | 23.10 |
| 10% aqueous solution of NaOH | 4.6 |
| 10% aqueous dispersion of aluminium silicate | 23.10 |
| 3% aqueous solution of boric acid | 2.70 |

The thus obtained dispersion of elemental particles is introduced into the following composition:

| | |
|---|---|
| water to make up to | 100 |
| galactomannan | 0.8-1.5 |
| 50% acrylic-styrene resin emulsion | 18 |

and the obtained product is introduced in the above-mentioned composition B in replacement of composition A; upon gently mixing a dispersion comprising agglomerations is obtained.

When in composition A a relatively high amount of Ca carbonate or other suitable solid powder is used (e.g. 25-30%), paints are obtainable which provide an embossed surface when applied. Low amounts of Ca carbonate provide paints giving smooth surfaces.

It may be desirable to mix with each others gels having the same or different colour as obtained according to composition B of Example 13, prior to their introduction into the vehicle. This operating procedure allows to obtain elemental particles having increased homogeneity in their average dimension.

Similarly, when it is desirable to obtain agglomerations having a more uniform average dimension, it is preferred to mix with each other gels having the same or different colour, e.g. obtained according to composition B of Example 13, wherein composition A has been replaced by the obtained dispersion of elemental particles.

## Claims

1. A single- or multicoloured water paint comprising a dispersion of a macromolecular colloid in water, characterized in that said colloid is in the form of agglomerations with dimensions of from 0.5- to 10 mm, which are obtainable by insolubilising a second macromolecular colloid in a water dispersion of elemental particles obtained by insolubilising a first macromolecular colloid in water in the presence of solid particles and a film forming emulsion polymer, said agglomerations being susceptible to break up into said elemental particles, when subjected to shear stress conditions of usual paint application means.

2. A water paint according to Claim 1, wherein said first and second macromolecular colloid are selected from anionic and non-ionic colloids.

3. A water paint according to Claim 2, wherein the anionic colloid is selected from the group consisting of sulphated, sulphonated and carboxylated synthetic and/ or natural linear polymers.

4. A water paint according to Claim 3, wherein said anionic colloid is a carboxylated cellulosic material selected from the group consisting of water soluble carboxyalkyl cellulose and carboxyalkyl hydroxypropil cellulose.

5. A water paint according to Claim 2, wherein said non-ionic colloid is selected from the group consisting of hydroxyalkyl ethers of polysaccharides, polygalactoglycanes, ethoxylated and propoxylated polygalactoglycanes.

6. A water paint according to any of claims 1 to 5, wherein said solid particles have a dimension of from 0.2 to 40 micron and are selected from the group consisting of silicates, barium sulphate, aluminum oxide, titanium dioxide, silica, Ca carbonate, Fe oxide, Cr oxide and solid organig pigments.

7. A water paint according to any of claims 1 to 6, wherein said film forming emulsion polymer is selected from the group consisting of modified vinyl polymer and acrylic polymers.

8. A water paint according to any of claims 1 to 7, wherein said film forming emulsion polymer is selected from the group consisting of styrene-acrylic resins, vinyl-acrylic resins, pure acrylic resins, chloro-vinyl polymers and vinyl-versatic resins.

9. A process for preparing a water paint according to any of Claims 1 to 8, comprising the steps of:
a) contacting in water, a first macromolecular colloid or mixture thereof with an insolublising agent for said colloid, in the presence of solid particles and of a film forming emulsion polymer, thereby to cause gelification or at least partial insolubilisation of said colloid on said solid particles and obtain a dispersion of elemental particles in water, and
b) insolubilising a second macromolecular colloid or mixture thereof with an insolubilising agent therefor in the presence of said water dispersion of elemental particles.

10. A process according to Claim 9, wherein said solid particles in step a) have a dimension of from 0.2 to 40 micron and are selected from the group consisting of silicates, barium sulphate, aluminum oxide, titanum dioxide, silica, Ca carbonate, Fe oxide, Cr oxide and solid organic pigments.

11. A process according to Claim 9 or 10, wherein said solid particles are dispersed in water in the presence of a non-ionic wetting agent, selected from the group consisting of products of condensation of ethylene or propylene oxides and alkyl phenols, derivatives of ethoxylated or propoxylated fatty acids and ethoxylated acetilene derivatives in concentration of from 0.1 to 0.5% by wt.

12. A process according to any of claims 9 to 11, wherein in step a) said film forming emulsion polymer is selected from the group consisting of modified vinyl polymers and acrylic polymers in concentration of from 10 to 35% by wt.

13. A process according to Claim 12, wherein said emulsion polymer is selected from the group consisting of styrene-acrylic resins, vinyl-acrylic resins, pure acrylic resins, chloro-vinyl polymer and vinyl-versatic resins.

14. A process according to any of claims 9 to 13, wherein in step a) said colloid is present in concentration of from 0.5 to 7% by wt. and is selected from the group consisting of sulphonated, sulphated and carboxylated synthetic and/or natural linear anionic polymers.

15. A process according to Claim 14, wherein said anionic polymer is selected from the group consisting of carboxyalkyl cellulose and carboxyalkyl hydroxyalkyl cellulose.

16. A process according to any of claims 9 to 15, wherein said first colloid is a non-ionic colloid which is present at a concentration of from 0.5 to 7% by wt. and is selected from the group consisting of alkyl and hydroxyalkyl ethers of polysaccharides, polygalactoglycanes and ethoxylated or propoxylated polygalactoglycanes.

17. A process according to Claim 14, wherein the insolubilising agent comprises an organic or inorganic salt of Al, Fe, Cu, Ca, Ag or heavy metals.

18. A process according to claim 16, wherein the colloid is a polygalactoglycane or derivatives thereof and the insolubilising agent is selected from boric acid, alkanolamine or acetylacetonate titanate or zirconate.

19. A process according to any of claims 9 to 18, wherein the colloid in step b) has the same chemical nature of that used in step a).

20. A process according to any of claims 9 to 19, wherein in step a) said solid particles are in concentration in water of from 10 to 40% by wt. and the colloid has a molecular weight below 100,000.

21. A process according to any of claims 9 to 19, wherein in step a) said solid particles are present in concentration of from 0.5 to 5% by wt. and the colloid has a molecular weight above 500,000.

22. A process according to any of claims 9 to 21, wherein in step b) said second colloid has a molecular weight above 500,000.

23. A process according to claim 22, wherein in step b) said colloid is present in a concentration of from 0.5 to 5% by wt.

24. A process according to claim 23, wherein a film forming emulsion polymer is added in step b).

## Patentansprüche

1. Ein- oder mehrfarbige Wasserfarbe, umfassend eine Dispersion eines makromolekularen Kolloids in Wasser, dadurch gekennzeichnet, daß das Kolloid in Form von Agglomerationen mit Abmessungen von 0,5 bis 10 mm vorliegt, die erhältlich sind durch Unlöslichmachung eines zweiten makromolekularen Kolloids in einer wässerigen Dispersion von elementaren Teilchen, erhalten durch Unlöslichmachung eines ersten makromolekularen Kolloids in Wasser in Gegenwart fester Teilchen und eines filmbildenden Emulsionspolymers, wobei diese Agglomerationen in die genannten elementaren Teilchen zerbrechen können, wenn sie Scherbeanspruchungsbedingungen üblicher Farbauftragsmittel ausgesetzt sind.

2. Wasserfarbe nach Anspruch 1, worin das erste und das zweite makromolekulare Kolloid unter anionischen und nichtionischen Kolloiden ausgewählt werden.

3. Wasserfarbe nach Anspruch 2, worin das anionische Kolloid aus der Gruppe bestehend aus sulfatierten, sulfonierten und carboxylierten synthetischen und/oder natürlichen linearen Polymeren ausgewählt wird.

4. Wasserfarbe nach Anspruch 3, worin das anionische Kolloid ein carboxyliertes cellulosisches Material ist, ausgewählt aus der Gruppe bestehend aus wasserlöslicher Carboxyalkylcellulose und Carboxyalkyl-hydroxypropylcellulose.

5. Wasserfarbe nach Anspruch 2, worin das nichtionische Kolloid aus der Gruppe bestehend aus Hydroxyalkylethern von Polysacchariden, Polygalactoglycanen, ethoxylierten und propoxylierten Polygalactoglycanen ausgewählt wird.

6. Wasserfarbe nach einem der Ansprüche 1 bis 5, worin die festen Teilchen eine Abmessung von 0,2 bis 40 Mikrometern aufweisen und aus der Gruppe bestehend aus Silicaten, Bariumsulfat, Aluminiumoxid, Titandioxid, Siliciumdioxid, Ca-carbonat, Fe-oxid, Cr-oxid und festen organischen Pigmenten ausgewählt werden.

7. Wasserfarbe nach einem der Ansprüche 1 bis 6, worin das filmbildende Emulsionspolymer aus der Gruppe bestehend aus modifizierten Vinylpolymeren und Acrylpolymeren ausgewählt wird.

8. Wasserfarbe nach einem der Ansprüche 1 bis 7, worin das filmbildende Emulsionspolymer aus der Gruppe bestehend aus Styren-Acryl-Harzen, Vinyl-Acryl-Harzen, reinen Acrylharzen, Chlorvinylpolymeren und Vinyl-Versatin-Harzen ausgewählt wird.

9. Verfahren zur Herstellung einer Wasserfarbe nach einem der Ansprüche 1 bis 8, welches die folgenden Schritte umfaßt:
a) das Inkontaktbringen in Wasser eines ersten makromolekularen Kolloids oder einer Mischung davon mit einem Mittel, welches dieses Kolloid unlöslich macht, in Gegenwart fester Teilchen und eines filmbildenden Emulsionspolymers, um hierdurch eine Gelbildung oder eine zumindest teilweise Unlöslichmachung des Kolloids auf den festen Teilchen zu bewirken und eine Dispersion von elementaren Teilchen in Wasser zu erhalten, und
b) das Unlöslichmachen eines zweiten makromolekularen Kolloids oder einer Mischung davon mit einem dasselbe unlöslichmachenden Mittel in Gegenwart der wässerigen Dispersion von elementaren Teilchen.

10. Verfahren nach Anspruch 9, worin die festen Teilchen in Schritt a) Abmessungen von 0,2 bis 40 Mikrometern aufweisen und aus der Gruppe bestehend aus Silicaten, Bariumsulfat, Aluminiumoxid, Titandioxid, Siliciumdioxid, Ca-carbonat, Fe-oxid, Cr-oxid und festen organischen Pigmenten ausgewählt werden.

11. Verfahren nach Anspruch 9 oder 10, worin die festen Teilchen in Gegenwart eines nichtionischen Benetzungsmittels, ausgewählt aus der Gruppe bestehend aus Kondensationsprodukten von Ethylen- oder Propylenoxiden und Alkylphenolen, Derivaten ethoxylierter oder propoxylierter Fettsäuren und ethoxylierten Acetylenderivaten, in Wasser dispergiert werden, wobei das nichtionische Benetzungsmittel in einer Konzentration von 0,1 bis 0,5 Gew.-% vorliegt.

12. Verfahren nach einem der Ansprüche 9 bis 11, worin in Schritt a) das filmbildende Emulsionspolymer aus der Gruppe bestehend aus modifizierten Vinylpolymeren und Acrylpolymeren in einer Konzentration von 10 bis 35 Gew.-% ausgewählt wird.

13. Verfahren nach Anspruch 12, worin das Emulsionspolymer aus der Gruppe bestehend aus Styren-Acryl-Harzen, Vinyl-Acryl-Harzen, reinen Acrylharzen, Chlorvinylpolymeren und Vinyl-Versatin-Harzen ausgewählt wird.

14. Verfahren nach einem der Ansprüche 9 bis 13, worin in Schritt a) das Kolloid in einer Konzentration von 0,5 bis 7 Gew.-% vorliegt und aus der Gruppe bestehend aus sulfonierten, sulfatierten und carboxylierten synthetischen und/oder natürlichen linearen anionischen Polymeren ausgewählt wird.

15. Verfahren nach Anspruch 14, worin das anionische Polymer aus der Gruppe bestehend aus Carboxyalkylcellulose und Carboxyalkyl-hydroxyalkylcellulose ausgewählt wird.

16. Verfahren nach einem der Ansprüche 9 bis 15, worin das erste Kolloid ein nichtionisches Kolloid ist, welches in einer Konzentration von 0,5 bis 7 Gew.-% vorliegt und aus der Gruppe bestehend aus Alkyl- und Hydroxyalkylethern von Polysacchariden, Polygalactoglycanen und ethoxylierten oder propoxylierten Polygalactoglycanen ausgewählt wird.

17. Verfahren nach Anspruch 14, worin das unlöslichmachende Mittel ein organisches oder anorganisches Salz von Al, Fe, Cu, Ca, Ag oder Schwermetallen umfaßt.

18. Verfahren nach Anspruch 16, worin das Kolloid ein Polygalactoglycan oder ein Derivat davon ist und das unlöslichmachende Mittel unter Borsäure, Alkanolamin- oder Acetylacetonattitanat oder -zirconat ausgewählt wird.

19. Verfahren nach einem der Ansprüche 9 bis 18, worin das Kolloid in Schritt b) dieselbe chemische Beschaffenheit besitzt wie das in Schritt a) verwendete.

20. Verfahren nach einem der Ansprüche 9 bis 19, worin in Schritt a) die festen Teilchen in einer Konzentration in Wasser von 10 bis 40 Gew.-% vorliegen und das Kolloid eine Molekülmasse von weniger als 100.000 aufweist.

21. Verfahren nach einem der Ansprüche 9 bis 19, worin in Schritt a) die festen Teilchen in einer Konzentration von 0,5 bis 5 Gew.-% vorliegen und das Kolloid eine Molekülmasse von mehr als 500.000 aufweist.

22. Verfahren nach einem der Ansprüche 9 bis 21, worin in Schritt b) das zweite Kolloid eine Molekülmasse von mehr als 500.000 aufweist.

23. Verfahren nach Anspruch 22, worin in Schritt b) das Kolloid in einer Konzentration von 0,5 bis 5 Gew.-% vorliegt.

24. Verfahren nach Anspruch 23, worin in Schritt b) ein filmbildendes Emulsionspolymer zugesetzt wird.

## Revendications

1. Peinture à l'eau monochrome ou multicolore comprenant une dispersion d'un colloïde macromoléculaire dans de l'eau, caractérisée en ce que ledit colloïde est sous la forme d'agglomérats ayant des dimensions de 0,5 à 10 mm qui peuvent être obtenus en insolubilisant un second colloïde macromoléculaire dans une dispersion aqueuse de particules élémentaires obtenue en insolubilisant un premier colloïde macromoléculaire dans de l'eau en présence de particules solides et d'un polymère filmogène en émulsion, lesdits agglomérats étant susceptibles de se briser en lesdites particules élémentaires lorsqu'ils sont soumis aux conditions de contrainte de cisaillement des moyens habituels d'application de peinture.

2. Peinture à l'eau selon la revendication 1, dans laquelle lesdits premier et second colloïdes macromoléculaires sont choisis parmi les colloïdes anioniques et non ioniques.

3. Peinture à l'eau selon la revendication 2, dans laquelle le colloïde anionique est choisi dans le groupe constitué des polymères linéaires sulfatés, sulfonés et carboxylés synthétiques et/ou naturels.

4. Peinture à l'eau selon la revendication 3, dans laquelle ledit colloïde anionique est une matière cellulosique carboxylée choisie dans le groupe constitué d'une carboxyalkylcellulose et d'une carboxyalkylhydroxypropylcellulose hydrosolubles.

5. Peinture à l'eau selon la revendication 2, dans laquelle ledit colloïde non ionique est choisi dans le groupe constitué des éthers hydroxyalkyliques des polysaccharides, des polygalactoglycanes, des polygalactoglycanes éthoxylés et propoxylés.

6. Peinture à l'eau selon l'une quelconque des revendications 1 à 5, dans laquelle lesdites particules solides ont une dimension de 0,2 à 40 µm et sont choisies dans le groupe constitué des silicates, du sulfate de baryum, d'un oxyde d'aluminium, du dioxyde de titane, de la silice, du carbonate de Ca, d'un oxyde de Fe, d'un oxyde de Cr et des pigments organiques solides.

7. Peinture à l'eau selon l'une quelconque des revendications 1 à 6, dans laquelle ledit polymère filmogène en émulsion est choisi dans le groupe constitué d'un polymère vinylique modifié et des polymères acryliques.

8. Peinture à l'eau selon l'une quelconque des revendications 1 à 7, dans laquelle ledit polymère filmogène en émulsion est choisi dans le groupe constitué des résines styrène-acryliques, des résines vinyl-acryliques, des résines acryliques pures, des polymères chlorovinyliques et des résines vinyl-versatiques.

9. Procédé pour préparer une peinture à l'eau selon l'une quelconque des revendications 1 à 8, comprenant les étapes de :
a) mise en contact, dans de l'eau, d'un premier colloïde macromoléculaire ou d'un mélange de celui-ci avec un agent insolubilisant pour ledit colloïde, en présence de particules solides et d'un polymère filmogène en émulsion, de façon à provoquer la gélification ou l'insolubilisation au moins partielle dudit colloïde sur lesdites particules solides et à obtenir une dispersion de particules élémentaires dans de l'eau, et
b) l'insolubilisation d'un second colloïde macromoléculaire ou d'un mélange de celui-ci avec un agent insolubilisant pour celui-ci, en présence de ladite dispersion de particules élémentaire dans de l'eau.

10. Procédé selon la revendication 9, dans lequel lesdites particules solides de l'étape a) ont une dimension de 0,2 à 40 µm et sont choisies dans le groupe constitué des silicates, du sulfate de baryum, d'un oxyde d'aluminium, du dioxyde de titane, de la silice, du carbonate de Ca, d'un oxyde de Fe, d'un oxyde de Cr et des pigments organiques solides.

11. Procédé selon la revendication 9 où 10, dans lequel lesdites particules solides sont dispersées dans de l'eau en présence d'un agent mouillant non ionique, choisi dans le groupe constitué des produits de condensation des oxydes d'éthylène ou de propylène et des alkylphénols, des dérivés d'acides gras éthoxylés ou propoxylés et des dérivés acétyléniques éthoxylés en une concentration de 0,1 à 0,5 % en poids.

12. Procédé selon l'une quelconque des revendications 9 à 11, dans lequel, dans l'étape a), ledit polymère filmogène en émulsion est choisi dans le groupe constitué des polymères vinyliques modifiés et des polymères acryliques en une concentration de 10 à 35 % en poids.

13. Procédé selon la revendication 12, dans lequel ledit polymère en émulsion est choisi dans le groupe constitué des résines styrène-acryliques, des résines vinyl-acryliques, des résines acryliques pures, des polymères chlorovinyliques et des résines vinylversatiques.

14. Procédé selon l'une quelconque des revendications 9 à 13, dans lequel, dans l'étape a), ledit colloïde est présent en une concentration de 0,5 à 7 % en poids et est choisi dans le groupe constitué des polymères anioniques linéaires sulfonés, sulfatés et carboxylés synthétiques et/ou naturels.

15. Procédé selon la revendication 14, dans lequel ledit polymère anionique est choisi dans le groupe constitué d'une carboxyalkylcellulose et d'une carboxyalkylhydroxyalkylcellulose.

16. Procédé selon l'une quelconque des revendications 9 à 15, dans lequel ledit premier colloïde est un colloïde non ionique qui est présent à une concentration de 0,5 à 7 % en poids et est choisi dans le groupe constitué des éthers alkyliques et hydroxyalkyliques des polysaccharides, polygalactoglycanes et des polygalactoglycanes éthoxylés ou propoxylés.

17. Procédé selon la revendication 14, dans lequel l'agent insolubilisant comprend un sel organique ou inorganique de Al, Fe, Cu, Ca, Ag ou de métaux lourds.

18. Procédé selon la revendication 16, dans lequel le colloïde est un polygalactoglycane ou ses dérivés, et l'agent insolubilisant est choisi parmi l'acide borique, une alcanolamine et le titanate ou le zirconate d'acétylacétonate.

19. Procédé selon l'une quelconque des revendications 9 à 18, dans lequel le colloïde dans l'étape b) a la même nature chimique que celui utilisé dans l'étape a).

20. Procédé selon l'une quelconque des revendications 9 à 19, dans lequel, dans l'étape a), lesdites particules solides sont dans une concentration dans l'eau de 10 à 40 % en poids, et le colloïde a un poids moléculaire en dessous de 100 000.

21. Procédé selon l'une quelconque des revendications 9 à 19, dans lequel, dans l'étape a), lesdites particules solides sont présentes en une concentration de 0,5 à 5 % en poids, et le colloïde a un poids moléculaire supérieur à 500 000.

22. Procédé selon l'une quelconque des revendications 9 à 21, dans lequel, dans l'étape b), ledit second colloïde a un poids moléculaire supérieur à 500 000.

23. Procédé selon la revendication 22, dans lequel, dans l'étape b), ledit colloïde est présent en une concentration de 0,5 à 5 % en poids.

24. Procédé selon la revendication 23, dans lequel un polymère filmogène en émulsion est ajouté dans l'étape b).
